# EUROPÄISCHE PATENTANMELDUNG

(11) **EP 3 326 834 A1**
(43) Veröffentlichungstag der Anmeldung: **30.05.2018**
(21) Anmeldenummer: 16200290.1
(22) Anmeldetag: 23.11.2016
(51) Int. Cl.: B44C 5/04, B27D 1/00, C09D 4/00, B44C 1/24

(54) **PLATTENFÖRMIGES WERKSTÜCK, VERFAHREN UND ANLAGE ZU DESSEN HERSTELLUNG, SOWIE LACKZUSAMMENSETZUNG**

(71) Anmelder: Friedrich Klumpp GmbH, 70469 Stuttgart (DE)
(72) Erfinder:
(74) Vertreter: Witte, Weller & Partner Patentanwälte mbB

(57) **Zusammenfassung**

Die Offenbarung bezieht sich auf ein Verfahren zur Herstellung eines plattenförmigen Werkstücks (10), mit den Schritten Bereitstellen einer Trägerschicht (12), Erzeugen einer Dekorschicht (14) auf der Trägerschicht (16), Aufbringen eines Beschichtungsstoffes (18) auf Lackbasis auf die Dekorschicht (14) zur Erzeugung einer Deckschicht (16), Pressen des Werkstücks (10) in einer Pressvorrichtung (28), umfassend Erzeugung einer Oberflächenstrukturierung (42) in der Deckschicht (16), und Aushärten der strukturierten Deckschicht (16) durch elektromagnetische Strahlung, insbesondere UV-Strahlung. Die Offenbarung bezieht sich ferner auf eine Anlage (60) zur Herstellung eines plattenförmigen Werkstücks (10), auf ein plattenartig gestaltetes Werkstück (10), sowie auf eine Lackzusammensetzung und auf Verwendungen einer Lackzusammensetzung.

## Beschreibung

Die vorliegende Offenbarung betrifft ein Verfahren zur Herstellung plattenförmiger Werkstücke, eine Anlage zur Herstellung plattenförmiger Werkstücke. Die Offenbarung betrifft ferner ein plattenartig gestaltetes Werkstück, das insbesondere gemäß dem Herstellungsverfahren und/oder in der Anlage herstellbar ist. Ferner betrifft die Offenbarung eine lösemittelfreie Lackzusammensetzung sowie vorteilhafte Verwendungen einer derartigen Lackzusammensetzung.

Die vorliegende Offenbarung befasst sich mit der Herstellung plattenförmiger Bauteile, also grundsätzlich flach gestalteter Werkstücke mit einer flächigen Erstreckung. Derartige Bauteile können etwa für Laminatböden, Paneele, insbesondere Deckenpaneele oder Wandpaneele, Möbelstücke, Arbeitsplatten, Tischplatten, Fensterbänke, Treppenstufen und dergleichen genutzt werden. Wesentliche Anwendungen finden sich im Bereich Fußböden, also bei der Herstellung von Laminat.

Es besteht auch bei derartigen Werkstücken der Wunsch nach einer natürlichen Erscheinung, die etwa die Maserung sowie die Strukturierung (das Relief) von Holz imitiert. Dies wird beispielhaft dadurch erreicht, dass ein solches Bauteil schichtartig gestaltet ist, und zumindest eine Trägerschicht, eine Dekorschicht sowie eine Deckschicht umfasst. Die Trägerschicht gewährleistet eine bestimmte mechanische Stabilität. Die Dekorschicht ist beispielhaft im Wesentlichen flach gestaltet und kann etwa Dekorpapiere, Dekorfolien, Furniere, Dekorbögen und dergleichen umfassen. Üblicherweise ist die Dekorschicht zwischen der Trägerschicht und der Deckschicht angeordnet, wobei dies nicht ausschließt, dass ggf. weitere Schichten dazwischen angeordnet sind. Die Deckschicht bewirkt einerseits eine Versiegelung der Dekorschicht und gewährleistet eine gewünschte Stabilität und Lebensdauer. Die Deckschicht kann jedoch auch dazu dienen, eine Strukturierung in Form eines Reliefs zu erzeugen, so dass der natürliche Eindruck verstärkt wird.

Insgesamt kann also beispielhaft eine Holzmaserung gemeinsam durch die Dekorschicht und die Deckschicht nachgebildet werden, wobei die Dekorschicht eine optische Wiedergabe enthält, und wobei die Deckschicht mit ihrer Strukturierung einen räumlichen Eindruck erzeugt. Die Dekorschicht wird zur Darstellung einer naturgetreuen Nachbildung, beispielsweise einer Holzoberfläche, üblicherweise mit der strukturierten Oberfläche in Überdeckung gebracht (sogenannte Synchronität).

Im Stand der Technik sind diverse Verfahren bekannt, mit denen sich derartige Bauteile erzeugen lassen. Diese weisen regelmäßig spezifische Vorteile, aber auch spezifische Nachteile auf.

Beispielhaft können strukturierte Oberflächen auf Basis von Melamin bzw. von Melaminharz erzeugt werden. Dies erfolgt üblicherweise in sogenannten Taktpressen oder Kurztaktpressen, bei denen Pressplatten (entsprechend den Stempeln) mit einer Strukturierung versehen sind, die als Negativ der gewünschten Zielstruktur ausgebildet sind. Eine Taktzeit für einen Pressvorgang bei derartigen Taktpressen umfasst etwa 15 bis 30 s (Sekunden). Üblicherweise sind die Taktpressen beheizbar, so dass über deren Platten/Strukturbleche ein Wärmeeintrag in das Bauteil erfolgen kann. Eine übliche Temperatur für den Pressvorgang kann etwa 150 bis 200 °C (Celsius) betragen.

Das Melamin kann beispielhaft über einen Träger in Form von getränkten Papieren oder direkt flüssig aufgebracht werden. Sofern das Melamin flüssig aufgebracht wird, ist zumindest eine teilweise Trocknung erforderlich, bevor ein solches Werkstück für die weitere Bearbeitung in die Taktpresse gebracht werden kann.

Auf Basis von Melamin lassen sich harte Oberflächen erzielen, die eine gute Verschleißbeständigkeit aufweisen. Dies führt jedoch im Umkehrschluss etwa bei der Anwendung für Bodenlaminate zu akustischen Nachteilen (Trittschall). Ferner sind Melamin basierte Verfahren im Hinblick auf die verwendbaren Rohstoffe limitiert, so dass nur eine bedingte Variabilität gegeben ist. Ferner werden bei der Verwendung von Melaminharzen Formaldehyd genutzt, welches bekannte toxische Eigenschaften aufweist. Eine Ausgasung kann etwa zu einer Kontamination der Atemluft in geschlossenen Räumen führen.

Ein weiterer Ansatz zur Erzeugung strukturierter Oberflächen nutzt sogenannte UV-Lacke, also Lackzusammensetzungen, die unter Strahlung mit UV-Licht aushärten. Üblicherweise wird bei diesem Ansatz für die Strukturierung ein thixotrop eingestellter Lack über eine mit Gravur versehene Gummiwalze als Auftragswalze auf die Oberfläche aufgetragen. Dieser Ansatz ermöglicht nur eine begrenzte Strukturschärfe, da nicht beliebig tiefe Strukturen bzw. scharfe Übergänge erzeugt werden können. Es lassen sich insbesondere keine steilen Strukturflanken erzeugen. Die dargestellten Strukturen entsprechen nur wenig einer natürlichen Anmutung, insbesondere die Darstellung feiner Poren, etwa einer Holzoberfläche, ist auf diesem Weg nicht möglich. Die tatsächliche Ausbildung oder Wiedergabe der Struktur im erzeugten Bauteil ist stark temperaturabhängig, da es zu Fließeffekten und dergleichen kommt.

Ferner sind bei diesem Ansatz gewisse Nachteile bei der Erzeugung des gewünschten Glanzzustands der Deckschicht in Kauf zu nehmen. Ein Glanzzustand kann etwa über eine Mikrostrukturierung gesteuert werden, eine solche Strukturierung ist jedoch bei Gummiwalzen kaum umsetzbar.

Ein weiterer Ansatz, der die Erzeugung von Deckschichten auf Basis von UV-Lacken umfasst, nutzt sogenannte Strukturfolien, die auf den flüssigen Lackfilm aufgebracht werden. Dieser Ansatz bedingt eine Härtung mittels Elektronenstrahlung und/oder UV-Strahlung durch die Folie hindurch. Ein derartiger Prozess kann etwa kontinuierlich ablaufen, wobei die Folien gemäß dem Bauteilvorschub kontinuierlich gelöst wird.

Beispielhaft ist aus der DE 10 2004 00 160 B4 ein Verfahren zur Herstellung eines Fußbodenpanels bekannt, welches eine Trägerplatte aus einer Faserplatte aufweist, die auf ihrer Oberseite mit einem Dekor und einer Versiegelung versehen ist, wobei die Versiegelung eine in mehreren Lagen aufgebrachte hochabriebfeste sowie kratzfeste Lackschicht umfasst, wobei die Lagen der Lackschicht jeweils auf Basis von UV-Licht getrocknet werden.

Aus der DE 2004 032 058 B4 ist ein Verfahren zur Herstellung einer Platte, insbesondere eines Fußbodenpaneels oder eine Möbelplatte, bekannt, wobei die Platte eine ein Dekor aufweisende Oberfläche aufweist, wobei die Oberfläche mit einer Grundierung versehen wird, wobei die grundierte Oberfläche mit einer Glättungsvorrichtung geglättet wird, und wobei die geglättete Oberfläche mit Druckzylindern bedruckt wird, um das Dekor zu erzeugen. Ferner wird vorgeschlagen, eine Kunstharz-basierte Versiegelungsschicht aufzubringen.

Aus der WO 2011/045690 A2 ist ein Verfahren zur Herstellung von Platten bekannt, die ein Substrat und eine mit einem gedruckten Dekor versehene Deckschicht aufweisen, wobei die Deckschicht zumindest zwei Schichten aufweist, von denen eine die Bedruckung umfasst, und wobei die andere Schicht der Deckschicht zumindest eine thermisch härtbare oder eine mittels Strahlung härtbare Komponente umfasst.

Es wird vorgeschlagen, als thermisch härtbare Komponente Kunstharz und als mittels Strahlung härtbare Komponente einen Lack zu verwenden, der mittels UV-Strahlung oder Elektronenstrahlung härtbar ist. Ferner wird vorgeschlagen, die Bedruckung direkt auf dem Substrat vorzusehen.

Aus der DE 101 28 290 B4 ist eine Kurztaktpresse bekannt, die zum Vergüten von Holzwerkstoffplatten, wie etwa Spanplatten oder Faserplatten, durch Beschichten mit Kunstharz imprägnierten Papieren zu Dekorplatten unter Anwendung von Druck und Wärme ausgebildet ist, wobei die Presse ein Pressengestell mit darin angeordneten Pressplatten umfasst, wobei Pressbleche vorgesehen sind, um eine Strukturierung zu bewirken, und wobei eine Widerstandsheizung zur Erwärmung des Pressguts vorgesehen ist.

Vor diesem Hintergrund liegt der Erfindung die Aufgabe zugrunde, ein Verfahren zur Herstellung eine plattenförmigen Werkstücks anzugeben, das verschiedene der oben genannten Nachteile überwindet und in alternativer Weise die Herstellung plattenförmiger Werkstücke ermöglicht, die einerseits mit einer Dekorschicht versehen sind, die einen hochwertige Anmutung aufweist, und die andererseits, im Bereich der Deckschicht, strukturierbar sind, so dass sich eine hochwertige, haptisch wahrnehmbare Oberfläche ergibt. Das Verfahren soll effizient sein und sich für die Massenherstellung eignen. Ferner sollen Umweltbelastungen und potenzielle gesundheitliche Beeinträchtigungen möglichst reduziert und weitgehend vermieden werden.

Schließlich soll eine Anlage zur Herstellung eines plattenförmigen Werkstücks angegeben werden, die sich vorzugsweise zur Durchführung des Verfahrens eignet. Ferner soll ein Werkstück, insbesondere in Form eines Bodenlaminats, Deckenpaneels, Wandpaneels oder Möbelbauteils, angegeben werden, dass verfahrensgemäß herstellbar ist und möglichst eine hochwertige Erscheinung aufweist, insbesondere betreffend die Qualität einer optischen Dekorschicht sowie einer Strukturierung im Bereich einer Deckschicht.

Schließlich sollen im Rahmen der vorliegenden Offenbarung geeignete Zusammensetzungen lösemittelfreier Lacke angegeben werden, die sich zur Verwendung beim Fertigungsverfahren bzw. in der Fertigungsanlage eignen.

Das Herstellungsverfahren betreffend wird die Aufgabe der Erfindung durch ein Verfahren zur Herstellung eines plattenförmigen Werkstücks gelöst, wobei das Verfahren die folgenden Schritte umfasst:
- Bereitstellung einer Trägerschicht,
- Erzeugen einer Dekorschicht auf der Trägerschicht,
- Aufbringen eines Beschichtungsstoffes auf Lackbasis auf die Dekorschicht zur Erzeugung eine Deckschicht,
- Treffen des Werkstücks in einer Pressvorrichtung, umfassend Erzeugung einer Oberflächenstrukturierung in der Deckschicht, und
- Aushärten der strukturierten Deckschicht durch elektromagnetische Strahlung, insbesondere UV-Strahlung.

Auf diese Weise wird die Aufgabe der Erfindung vollkommen gelöst.

Erfindungsgemäß wurde nämlich erkannt, dass besondere Lackzusammensetzungen, die mittels elektromagnetischer Strahlung härtbar sind, durch Pressen verarbeitet werden können, wobei der Pressvorgang eben auch die Ausbildung einer Oberflächenstrukturierung bzw. eines Reliefs in der aus dem Lack gebildeten Deckschicht umfassen kann. Auf diese Weise können Fertigungsprinzipien, die etwa bei der Verarbeitung von Kunstharz- oder Melamin-basierten Deckschichten genutzt werden, mit Fertigungsprinzipien kombiniert werden, die die Verarbeitung von Lacken, insbesondere von sogenannten UV-Lacken betreffen.

Gemäß zumindest beispielhaften Ausgestaltungen ist der Beschichtungsstoff melaminfrei und insbesondere sogar frei von Kunstharzen. Gleichwohl wurde erkannt, dass auch Lackzusammensetzungen mittels Pressen, insbesondere mittels Taktpressen, verarbeitet werden können. Die Strukturierung durch Abbildung eines Negativs, das an einer Platte (beispielsweise einem Strukturblech) der Pressvorrichtung vorgesehen ist, die der Deckschicht zugeordnet ist, kann deutlich feingliedriger und mit höherer Abbildungsschärfe erfolgen als dies etwa gemäß üblichen Verfahren ermöglicht ist, vergleiche auch die obigen Ausführungen zur Erzeugung von Strukturierungen über gravierte Gummiauftragswalzen sowie durch das Einlegen sogenannter Strukturfolien.

Die zumindest eine strukturierte Pressplatte der Pressvorrichtung besteht üblicherweise aus einem Metallwerkstoff, etwa aus Stahl oder Aluminium. In den Metallwerkstoff ist ein Relief in Form einer Negativstruktur der gewünschten Oberflächenstruktur des Werkstücks eingebracht. Da die Pressplatte im Wesentlichen senkrecht zur Oberfläche des Werkstücks bewegt wird, können scharfe Konturen mit steilen Flanken ausgebildet werden. Ein weiterer Vorteil besteht darin, dass etwa über eine Mikrostrukturierung der zumindest einen Pressplatte ein Glanzgrad der Deckschicht beeinflussbar ist, insbesondere steuerbar ist. Die Mikrostrukturierung kann eine bestimmte Oberflächengestaltung und/oder die Erzeugung einer definierten Oberflächenrauigkeit bei der Pressplatte umfassen.

Gemäß zumindest beispielhaften Ausführungsformen verläuft das Verfahren genau in der oben skizzierten Reihenfolge ab. Dies schließt gleichwohl gemäß zumindest weiteren beispielhaften Ausgestaltungen nicht aus, dass ggf. weitere Verfahrensschritte zwischengeschaltet sind.

Vorzugsweise handelt es sich bei dem Beschichtungsstoff auf Lackbasis um mittels UV-Strahlung härtbare Lacke, also um sogenannte UV-Lacke. UV-Lacke können lösungsmittelarm oder sogar lösungsmittelfrei bereitgestellt werden. Ferner erlaubt ein Aushärten mittels UV-Strahlung regelmäßig deutliche Energieeinsparungen im Vergleich zu einer rein auf Wärmeeintrag basierenden Aushärtung.

Unter einem vollständig ausgehärteten Zustand soll im Rahmen dieser Offenbarung ein Zustand verstanden werden, bei dem die Deckschicht, insbesondere zumindest deren Oberfläche, einen derart hohen Vernetzungsgrad aufweist, dass eine Weiterverarbeitung bzw. ein Gebrauch des Bauteils ermöglicht ist. Allgemein geht das Härten/Aushärten der Deckschicht mit einer Erhöhung des Vernetzungsgrades einher.

Gemäß einer beispielhaften Ausführungsform des Verfahrens ist eine der Deckschicht zugewandte Pressplatte der Pressvorrichtung mit einer Strukturierung versehen, die beim Pressen in der Deckschicht abgebildet wird. Die Strukturierung kann beispielsweise durch ein Strukturblech erzeugt werden, das mit der Pressplatte gekoppelt wird. Diese Negativstruktur definiert das sich ergebende Relief bzw. die sich ergebende Strukturierung der Deckschicht. Auf diese Weise kann eindrucksvoll etwa eine Holzmaserung nachgebildet werden, wobei sich der Effekt durch geeignete Kombinationen der Dekorschicht und der Deckschicht ergibt. Es versteht sich, dass auch andere Effekte erzeugbar sind, etwa ähnlich einem Korkwerkstoff, keramischen Werkstoffen, Mineralischen Werkstoffen und dergleichen. Allgemein besteht eine hohe Gestaltungsfreiheit.

Gemäß einer weiteren Ausgestaltung des Verfahrens ist die der Deckschicht zugewandte Pressplatte der Pressvorrichtung mit einer Mikrostrukturierung versehen, die einen Glanzgrad der Deckschicht definiert. Auf diese Weise kann nicht nur eine (makroskopische) Struktur, sondern eben auch eine Mikrostruktur der Deckschicht beeinflusst werden. Je nach tatsächlichem Anwendungsfall und Kundenwunsch kann somit die Deckschicht bewusst hochglänzend oder matt ausgeführt werden, wobei auch Zwischenstufen vorstellbar sind.

Gemäß einer weiteren Ausgestaltung des Verfahrens umfasst das Erzeugen der Dekorschicht das Aufbringen eines Dekorbogens. Dies kann beispielhaft das Aufbringen eines Dekorpapiers umfassen. Alternativen umfassen etwa Dekorfolien, Dekorfurniere, usw. Wesentlich ist, dass das Dekor in Form eines sich flächig erstreckenden dünnen, ggfs. schichtartig gestalteten Teils aufgebracht wird, das im fertigen Werkstück zwischen der Trägerschicht und der Deckschicht angeordnet ist. Auf diese Weise kann eine Vielzahl verschiedener Dekore erzeugt werden, wobei sich ein hochwertiger Eindruck ergibt, da die Dekorschicht durch die Lack-basierte Deckschicht versiegelt wird. Dekorpapiere und Dekorbögen können kostengünstig bereitgestellt werden. In Zusammenhang mit der Strukturierung der Deckschicht kann sich für das Werkstück ein hochwertiger visueller und haptischer Eindruck ergeben.

Gemäß einer weiteren Ausgestaltung des Verfahrens ist dem Schritt des Pressens ein Schritt vorgelagert, der ein Aufbringen eines Trennpapiers auf die Deckschicht umfasst, wobei das Trennpapier nach dem Pressen entfernt wird, vorzugsweise vor dem Aushärten mittels elektromagnetischer Strahlung. Das Aufbringen des Trennpapiers kann direkt auf der Deckschicht erfolgen. Es ist auch vorstellbar, das Trennpapier zunächst auf der der Deckschicht zugeordneten Pressplatte (bzw. dem Strukturblech) vorzusehen, um sodann das Trennpapier mit dem Vorschub der Pressplatte an das Werkstück heranzuführen. Das Trennpapier ermöglicht ein einfaches Lösen der Deckschicht von der Pressplatte (bzw. dem Strukturblech), wobei Rückstände an der Pressplatte (bzw. dem Strukturblech) vermieden werden. In diesem Zusammenhang ist anzumerken, dass die Deckschicht noch nicht unbedingt vollständig ausgehärtet ist, wenn die Pressvorrichtung geöffnet wird, also wenn die Pressplatte vom Werkstück abgehoben wird (oder umgekehrt das Werkstück von der Pressplatte abgehoben wird).

Gemäß einer Weiterbildung dieser Ausgestaltung wird ein Glanzgrad der Deckschicht durch eine Oberflächenstruktur des Trennpapiers definiert. Mit anderen Worten kann, je nachdem, ob das Trennpapier besonders rau oder glatt gestaltet ist, eine matte oder glänzende Oberfläche der Deckschicht erzeugt werden.

Es versteht sich, dass der Glanzgrad der Deckschicht sowohl durch die Oberflächenstrukturierung, insbesondere die Mikrostrukturierung, der Pressplatte als auch über die Oberfläche des Trennpapiers steuerbar ist.

Gemäß einer weiteren beispielhaften Ausgestaltung des Verfahrens wird dem lackartigen Beschichtungsstoff ein Trennmittel beigemischt. Gemäß einer weiteren beispielhaften Ausgestaltung wird eine der Deckschicht zugewandte Pressplatte mit einem Trennmittel versehen. Auch eine Kombination beider Gestaltungen ist vorstellbar. Zusätzlich oder alternativ kann ein Trennpapier als Trennmittel verwendet werden.

Gemäß einer weiteren Ausgestaltung des Verfahrens wird der Beschichtungsstoff durch ein Gießverfahren aufgebracht. Der Lack-basierte Beschichtungsstoff eignet sich insbesondere für ein Auftragen mittels Gießen, da eine hinreichende Fließfähigkeit gegeben ist. Es versteht sich, dass auch andere Arten der Auftragung vorstellbar sind, die etwa ein Auftragen durch Walzen, ein Auftragen mit einem Rakel, oder ein Auftragen durch ein Spritzverfahren umfassen. Kombinierte Verfahren sind vorstellbar.

Da gemäß zumindest einigen beispielhaften Ausführungsformen eine Strukturierung (Makrostrukturierung) sowie ggf. auch eine Mikrostrukturierung (zur Steuerung eines Glanzgrades) der Deckschicht in nachfolgenden Arbeitsschritten erfolgt, ist ein Auftragen durch Gießen ein geeigneter Ansatz.

Es ist nicht erforderlich, mehrere dünne Lackschichten aufzutragen, und diese jeweils zumindest teilweise zu härten. Demgemäß wird gemäß zumindest einigen beispielhaften Ausführungsformen die Deckschicht einstufig aufgebracht.

Gemäß einer weiteren beispielhaften Ausgestaltung des Verfahrens erfolgt das Pressen in einer beheizbaren Pressvorrichtung, wobei das Pressen ein Erwärmen zumindest der Deckschicht umfasst. Demgemäß ist die Pressvorrichtung beheizbar, wobei zumindest die Pressplatte, die der Deckschicht zugeordnet ist, einen Wärmeeintrag in das Werkstück bewirkt, um die Deckschicht zumindest teilweise auszuhärten.

Vorzugsweise handelt es sich bei der Pressvorrichtung um eine Taktpresse, insbesondere um eine Kurztaktpresse mit beheizbaren Pressplatten. Vorzugsweise ist die Pressplatte, bei der auch eine Strukturierung (etwa in Form von Strukturblechen) vorgesehen ist, beheizbar, so dass der Beschichtungsstoff, der die Deckschicht ausbildet, durch die Pressplatte einerseits strukturiert und andererseits über den Wärmeeintrag zumindest teilweise gehärtet wird.

Pressplatten gemäß der o.g. Ausführungsform werden im Stand der Technik primär zur Verarbeitung von Kunstharz-basierten oder Melamin-basierten Beschichtungsstoffen verwendet. Im Rahmen dieser Offenbarung wird jedoch vorgeschlagen, derartige Pressvorrichtungen auch zur Bearbeitung von Werkstücken zu nutzen, bei denen die Deckschicht primär durch einen Beschichtungsstoff auf Lackbasis, insbesondere auf Basis mittels UV-Strahlung härtbarer Lacke, erzeugt wird.

Gemäß einer weiteren beispielhaften Ausgestaltung des Verfahrens erfolgt ein Aushärten der Deckschicht zweistufig, umfassend:
- Härten durch Wärmeeintrag in der Pressvorrichtung; und
- Härten durch elektromagnetische Bestrahlung, insbesondere mittels UV-Strahlung.

Beispielhaft kann die Deckschicht in einer ersten Stufen in der Presse soweit ausgehärtet werden, dass die eingebrachte Struktur auch außerhalb der Presse vollständig oder zumindest weitgehend erhalten bleibt, bis die Deckschicht durch das Härten mittels elektromagnetischer Bestrahlung weiter ausgehärtet ist.

Üblicherweise umfasst UV-Strahlung (Ultraviolette Strahlung) Wellenlängen im Bereich von etwa 100 nm (Nanometer) bis 380 nm. Bestimmte Teilbereiche des UV-Bands eignen sich insbesondere für das Aushärten von Lacken. Beispielhaft werden häufig sogenannte Mitteldrucklampen benutzt, die eine bestimmte UV-Strahlung emittieren, beispielsweise im Bereich UV-A, im Bereich UV-B, sowie im Bereich UV-C.

Gemäß einem weiteren Aspekt der vorliegenden Offenbarung wird die Aufgabe der Erfindung durch eine Anlage zur Herstellung eines plattenförmigen Werkstücks gelöst, wobei die Anlage Folgendes aufweist:
- eine Bereitstellungseinheit für eine Trägerschicht, insbesondere für Trägerplatten,
- eine Applikationseinheit für eine Dekorschicht, insbesondere für einen Dekorbogen,
- eine Aufbringeinheit zum Aufbringen eines Beschichtungsstoffes auf Lackbasis auf die Dekorschicht zur Erzeugung einer Deckschicht,
- eine Pressvorrichtung, insbesondere umfassend eine Kurztaktpresse, die eine Pressplatte umfasst, die mit einer Negativstruktur versehen ist, um während eines Pressvorgangs, bei dem die Trägerschicht, die Dekorschicht, und die Deckschicht miteinander gefügt werden, eine Oberflächenstrukturierung der Deckschicht zu erzeugen, wobei die Pressplatte vorzugsweise beheizbar ist, um die Deckschicht zumindest teilweise auszuhärten.
- Eine Bestrahlungseinheit zur Erzeugung elektromagnetischer Strahlung zum Aushärten der Deckschicht, und
- eine Handhabungseinheit zur Handhabung des Werkstücks.

Mittels der Handhabungseinheit, die etwa eine Förderstrecke umfassen kann, kann das Werkstück zwischen den diversen Stationen der Anlage bewegt werden. Insgesamt ist die Anlage zur taktweisen Fertigung ausgebildet, wobei vorzugsweise ein Takt der Taktpresse eine Dauer von etwa 10 s (Sekunden) bis 30 s umfasst.

Es versteht sich, dass weitere Stationen der Anlage für die weitere Verarbeitung des Werkstücks vorstellbar sind. Dies kann beispielhaft ein Sägen, ein Ablängen, eine Fräsbearbeitung oder Sonstiges umfassen. Eine Fräsbearbeitung ist etwa dann von Vorteil, wenn die Werkstücke als Bodenlaminat oder als Paneele verwendet werden sollen.

Vorzugsweise ist die Anlage dazu ausgebildet, eine Herstellung des plattenförmigen Werkstücks nach einem Verfahren gemäß zumindest einem hierin beschriebenen Ausführungsbeispiel zu ermöglichen.

Gemäß einem weiteren Aspekt der vorliegenden Offenbarung wird die Aufgabe der Erfindung durch ein plattenartig gestaltetes Werkstück gelöst, das Folgendes aufweist:
- eine Trägerschicht,
- eine Dekorschicht, die auf die Trägerschicht aufgebracht ist,
- eine Deckschicht auf Lackbasis, die die Dekorschicht bedeckt,
   wobei die Deckschicht eine Oberflächenstrukturierung aufweist, die durch eine Negativstruktur einer Pressplatte erzeugt ist, und
   wobei die Deckschicht zumindest teilweise durch elektromagnetische Strahlung, insbesondere durch UV-Strahlung, ausgehärtet ist.

Das Werkstück lässt sich beispielhaft als Laminatfussboden, Wandpaneel, Deckenpaneel, Möbelelement und in ähnlicher Weise nutzen.

Vorzugsweise ist das Verfahren durch ein Verfahren gemäß einem hierin beschriebenen Ausführungsbeispiel hergestellt. Vorzugsweise ist das Werkstück durch eine Anlage gemäß zumindest einem hierin beschriebenen Ausführungsbeispiel hergestellt.

Die Aufgabe der Erfindung wird ferner, eine Stoffformulierung oder Stoffzusammensetzung betreffend, durch eine lösemittelfreie Lackzusammensetzung gelöst, wobei die Lackzusammensetzung mittels einer Pressvorrichtung und/oder mittels elektromagnetischer Strahlung aushärtbar ist, wobei die Lackzusammensetzung Folgendes aufweist:
(a) Radikale polymerisierbare Bindemittel mit Monomeren und mit Oligomeren,
(b) thermische Initiatoren und/oder Photoinitiatoren, und
(c) Katalysatoren.

Das Aushärten mittels elektromagnetischer Bestrahlung betrifft vorzugsweise den Bereich der UV-Strahlung. Insbesondere muss dies nicht zwingend die Fähigkeit zum Aushärten mittels Wärmestrahlung (Infrarotstrahlung) umfassen. Das Aushärten mittels elektromagnetischer Strahlung kann demgemäß zu Definitionszwecken auch als Aushärten mittels elektromagnetischer Strahlung aufgefasst werden, die kürzere Wellenlängen als das für einen Menschen sichtbare Licht umfasst, also etwa Wellenlängen von weniger als 380 nm (Nanometer).

Gemäß einer beispielhaften Ausführungsform weist die Lackzusammensetzung ferner Folgendes auf:
(d) zumindest einen Zusatzstoff, der aus der Gruppe ausgewählt ist, die aus Folgendem besteht: Inhibitoren, Pigmente, Füllstoffe, Additive und Trennmittel.

Gemäß einer weiteren Ausführungsform der Lackzusammensetzung weist diese Folgendes auf:
(a) radikalisch polymerisierbare Bindemittel mit Monomeren von 5 bis 50 Gew.-%, vorzugsweise mit Monomeren von 10 bis 20 Gew.-%, und mit Oligomeren von 10 bis 80 Gew.-%, vorzugsweise von 50 bis 70 Gew.-%,
(b) thermische Initiatoren von 0,5 bis 5 Gew.-%, vorzugsweise von 2,5 bis 4 Gew.-%, und/oder Photoinitiatoren von 1 bis 6 Gew.-%, vorzugsweise von 2 bis 4 Gew.-%,
(c) Katalysatoren von 0 bis 3 Gew.-%, und
(d) mindestens einen Zusatzstoff, der aus der Gruppe ausgewählt ist, die aus Folgendem besteht: Inhibitoren, Pigmente, Füllstoffe, Additive und Trennmittel,
   wobei sich die jeweiligen Gewichtsprozente auf die Gesamtmasse der Zusammensetzung beziehen.

Es sind Ausgestaltungen vorstellbar, bei denen die Lackzusammensetzung exklusiv aus den Bestandteilen gemäß (a) bis (d) besteht.

Gemäß einer beispielhaften Ausführungsform ist die Lackzusammensetzung lösungsmittelarm oder lösungsmittelfrei. Unter Lösungsmittel werden im Sinne dieser Offenbarung bei Raumtemperatur flüssige Substanzen verstanden, die allein der Reaktionsführung oder der Erleichterung der Handhabung dienen, ohne in der fertig ausgehärteten Lackzusammensetzung noch vorhanden oder notwendig zu sein. Flüssige Monomere sind demgemäß keine Lösungsmittel in diesem Sinne.

Gemäß einer beispielhaften Ausgestaltung lässt sich die Lackzusammensetzung mittels einer Pressvorrichtung und/oder mittels energiereicher Strahlung aushärten. Gemäß einer beispielhaften Ausführungsform wird die Lackzusammensetzung zunächst mittels einer Pressvorrichtung zumindest teilweise gehärtet und anschließend mittels energiereichen Strahlern, beispielsweise UV-Strahlern, vollständig ausgehärtet.

Gemäß einer beispielhaften Ausgestaltung enthält das radikalisch polymerisierbare Bindemittel Monomere und Oligomere, die radikalisch polymerisierbare Gruppen aufweisen können. Unter radikalisch polymerisierbaren Gruppen werden im Sinne dieser Offenbarung beispielsweise ethylenisch ungesättigte Doppelbindungen und insbesondere (Meth)acryl-, Allyl-, Styryl-, Vinyl-, Vinyloxy- und/oder Vinylamin-Gruppen verstanden.

Gemäß einer beispielhaften Ausgestaltung enthält das Bindemittel mindestens ein polyfunktionelles Monomer oder Oligomer, d.h. ein Monomer oder Oligomer mit zwei oder mehr, vorzugsweise drei oder mehr und weiter bevorzugt vier oder mehr polymerisierbaren ethylenisch ungesättigten Doppelbindungen. Monomere und Oligomere mit zwei oder mehr radikalisch polymerisierbaren Gruppen wirken bei der Polymerisation als Vernetzer. Monomere oder Oligomere mit nur einer radikalisch polymerisierbaren Gruppe werden als monofunktionelle bzw. monoungesättigte Monomere oder Oligomere bezeichnet.

Gemäß einer beispielhaften Ausführungsform sind die Oligomere des radikalisch polymerisierbaren Bindemittels ausgewählt aus der Gruppe bestehend aus: Polyestern, Polyurethane, Poly(meth)acrylate, Epoxidharze, Polyetherharze und/oder Melaminharze acrylierte Harze und/oder metacrylierten Harze. Die zahlenmittlere Molmasse dieser Verbindungen kann beispielsweise bei 300 bis 10000, bevorzugt 800 bis 10000 liegen.

Beispiele für monoungesättigte Monomere sind: (Meth)acrylsäure und deren Ester, Maleinsäure und deren Halbester, Vinylacetat, Vinylether, substituierte Vinylharnstoffe, Styrol, Vinyltoluol. Beispiele für diungesättigte Monomere sind: Di(meth)acrylate wie Alkylenglykol-di(meth)acrylat, Polyethylenglykol-di(meth)acrylat, 1,3-Butandiol-di(meth)acrylat, Vinyl(meth)acrylat, Allyl(meth)acrylat, Divinylbenzol, Dipropylenglykol-di(meth)acrylat, Hexandiol-di(meth)acrylat. Beispiele für polyungesättigte Monomere sind: Glycerin-tri(meth)acrylat, Trimethylolpropan-tri(meth)acrylat, Pentaerythrit-tri(meth)acrylat, Pentaerythrit-tetra(meth)acrylat. Ferner kommen auch die entsprechenden ethoxylierten bzw. propoxylierten Derivate mit unterschiedlichen Alkoxilierungsgraden in Frage. Die Monomere können einzeln oder im Gemisch eingesetzt werden. Beispielsweise können Maleinsäureester und/oder Fumarsäureester eingesetzt werden.

Als Initiatoren für eine radikalische Polymerisation werden gemäß einer beispielhaften Ausgestaltung ein oder mehrere Initiatoren eingesetzt, die nach thermischer oder photochemischer Anregung Startradikale bilden. Thermische Initiatoren und Photoinitiatoren unterscheiden sich in der Bildung der reaktiven Spezies, die dann die radikalische Vernetzungsreaktion auslösen. Während Photoinitatoren nach der Absorption von Licht, bevorzugt UV-Licht, in einer Photolysereaktion zerfallen, geschieht dies bei thermischen Initiatoren durch Wärme.

Als Initiatoren für die thermische Initiierung eignen sich beispielsweise Azoverbindungen, insbesondere Azobisisobutyronitril; organische Peroxide, insbesondere Cyclohexanonperoxid, Methylethylketonperoxid, 1,1-Di-(tert-Butylperoxy)-3,3,5-trimethylcyclhexan, Benzoylperoxide und/oder anorganische Peroxide, insbesondere Peroxodisulfate.

Geeignete Photoinitiatoren sind beispielsweise solche, die im Wellenlängenbereich von 190 bis 600 nm absorbieren. Bevorzugte Photoinitiatoren sind beispielsweise Campherchinonderivate; Benzoine bzw. Benzoinderivate, insbesondere Benzoinether wie beispielsweise Benzildimethylketale; Benzophenone bzw.Benzophenonderivate; Acetophenon bzw. Acetophenonderivate; alpha-Hydroxyketone, insbesondere 1-Hydroxycyclohexyl-phenyl-keton oder 2-Hydroxy-2-methyl-1-phenyl-1-propanon; alpha-Aminoketone; Phenylglyoxylate, insbesondere Methylbezoylformat; phosphororganische Verbindungen, insbesondere Phosphinoxide, insbesondere Monoacylphosphinoxide (MAPO), Bisacylphosphinoxide (BAPO), wie beispielsweise Diphenyl-(2,4,6-trimethylbenzoyl)-phosphinoxid oder Phenyl-bis-(2,4,6-trimethylbenzoyl)-phosphinoxid; und/oder Thioxanthone bzw. Thioxanthon Derivate.

Die thermischen Initiatoren werden beispielsweise in Mengen von 0,5 bis 5 Gew.-%, bevorzugt 2,5 bis 4 Gew.-% eingesetzt, bezogen auf die Gesamtmasse der Lackzusammensetzung. Die Photoinitiatoren werden beispielsweise in Mengen von 1 bis 6 Gew.-%, bevorzugt 2 bis 4 Gew.-% eingesetzt, bezogen auf die Gesamtmasse der Lackzusammensetzung. Die Initiatoren können einzeln oder in Kombination eingesetzt werden.

Gemäß einer beispielhaften Ausgestaltung enthält die lösungsmittelfreie Lackzusammensetzung gegebenenfalls Katalysatoren. Als Katalysatoren für die photochemische Polymerisation werden beispielsweise polymerisierbare Beschleuniger eingesetzt, vorzugsweise Amine, weiter bevorzugt tertiäre Amine.

Beispielhaft nutzbare Amine sind N-(2-Meth acryloyloxyethyl)-N-methylanilin (MAAMA), N-(2-Methacryloyloxyethyl)-N-methyl-3,5-xylidin (MAMA3,5X), N-(2-Methacryloyloxyethyl)-N-methyl-p-toluidin (MAAMpT), N,N-Bis-(2-methacryloyloxyethyl)-p-toluidin (DMAApT) und N,N-Bis-(2-methacryloyloxyethyl)-3,5-xylidin (DMAA3,5X). Weitere beispielhaft nutzbare Amine, die als Beschleuniger für die radikalische Polymerisation geeignet sind, sind das kommerziell zugängliche 2-(Dimethylamino)ethylmethacrylat (DMAEMA), N-(2-Methacryloxyethyl)-N'-methylpiperazin (MAMP) oder N-(Methacrylamidomethy)morpholin (MAMMM).

Als Katalysatoren für die thermische Polymerisation dienen bekannte Schwermetallkatalysatoren wie beispielsweise Zink, Kobalt oder Mangan, zur Beschleunigung des Zerfalls von Peroxiden. Beispielhaft nutzbare Katalysatoren sind Kobaltsalze von Fettsäuren.

Die lösungsmittelfreie Lackzusammensetzung kann gemäß beispielhaften Ausführungsformen gegebenenfalls zusätzliche, für die Lackformulierung übliche Zusatzstoffe enthalten.

Sie können beispielsweise lackübliche Additive enthalten. Bei den Additiven handelt es sich um die üblichen auf dem Lacksektor einsetzbaren Additive. Beispiele für solche Additive sind Verlaufsmittel, z. B. auf der Basis von (Meth)acryl-Homopolymerisaten oder Silikonölen, Antikratermittel, Antischaummittel bzw. Entschäumerlösung, Haftvermittler, rheologiebeeinflussende Additive, Verdicker, Lichtschutzmittel, Dispergieradditive, Entlüfterlösungen, Substratbenetzungsadditive, Antiabsetzmittel. Die Additive werden in üblichen, dem Fachmann geläufigen Mengen eingesetzt.

Gemäß einer weiteren beispielhaften Ausführungsform enthält die erfindungsgemäße Lackzusammensetzung gegebenenfalls mindestens einen radikalisch polymerisierbaren Inhibitor.

Inhibitoren verhindern eine vorzeitige spontane Polymerisation. Sie werden dementsprechend auch als Stabilisatoren bezeichnet und ermöglichen eine verlängerte Lagerstabilität. Man unterscheidet aerobe Inhibitoren, die nur in Gegenwart von Sauerstoff effektiv wirksam sind, und anaerobe Inhibitoren, die auch bei Abwesenheit von Sauerstoff wirksam sind. In dieser sogenannten Inhibierungsperiode bilden die Inhibitoren mit den aus dem Initiator gebildeten Radikalen oder oligomeren Wachstumsradikalen inaktive Produkte.

Neben den genannten Bestandteilen kann die Lackzusammensetzung gemäß einer weiteren beispielhaften Ausführungsform auch Füllstoffe als Zusatzstoff enthalten, die zur Verbesserung der mechanischen Eigenschaften dienen. Es handelt sich bei den Füllstoffen um die üblichen in der Lackindustrie einsetzbaren Füllstoffe. Hierzu eignen sich organische oder anorganische Partikel oder Fasern. Bevorzugte anorganische partikuläre Füllstoffe sind amorphe, kugelförmige Materialien auf der Basis von Oxiden, wie beispielsweise Aluminiumoxid. Beispiele für Füllstoffe sind Siliciumdioxid, Aluminiumsilikat, Bariumsulfat, Talkum, Kieselsäure und/oder Magnesiumsilikate.

Daneben kann die Lackzusammensetzung gemäß einer weiteren beispielhaften Ausführungsform Füllstoffe zur Erhöhung der Kratzfestigkeit aufweisen. Als Füllstoffe sind beispielsweise micronisiertes Aluminiumoxid oder micronisierte Siliciumoxide nutzbar. Diese transparenten Füllstoffe können mit Verbindungen überzogen sein, die UV-härtbare Gruppen enthalten, z. B. mit acrylfunktionellen Silanen, und werden somit bei der Strahlenhärtung mit einbezogen. Die Füllstoffe sind als Handelsprodukte, beispielsweise unter dem Namen AKTISIL®, erhältlich.

Gemäß einer weiteren beispielhaften Ausführungsform kann die Lackzusammensetzung weitere Zusatzstoffe enthalten, wie beispielsweise Pigmente. Es handelt sich dabei um die üblichen in der Lackindustrie einsetzbaren Pigmente wie beispielsweise organischen oder anorganischen farbgebenden Pigmente und Korrosionsschutzpigmente. Pigmente werden zur Einstellung der Eigenfarbe bzw. der Transparenz zugesetzt. Beispiele für anorganische oder organische Farbpigmente sind Titandioxid, mikronisiertes Titandioxid, Eisenoxidpigmente, Ruß, Azopigmente, Phthalocyaninpigmente, Chinacridon- und Pyrrolopyrrolpigmente. Bevorzugt sind anorganische Pigmente, vor allem Mischphasenpigmente auf Basis von Metalloxiden, beispielsweise TiO₂.

Gemäß einer weiteren beispielhaften Ausführungsform weist die Lackzusammensetzung Trennmittel auf. Ein Trennmittel ermöglicht eine leichte Ablösbarkeit von einer Presse, insbesondere dann, wenn die Lackzusammensetzung zumindest teilweise mittels einer Presse ausgehärtet wird. Bevorzugte Trennmittel sind beispielsweise Stearinsäure, Zinkstearat oder Wachse.

Gemäß einem weiteren Aspekt wird die Aufgabe der Erfindung durch die Verwendung einer Lackzusammensetzung gemäß zumindest einem hierin genannten Ausführungsbeispiel in einem Verfahren zur Herstellung eines plattenförmigen Werkstücks gelöst, vorzugsweise gemäß zumindest einem hierin genannten Ausführungsbeispiel, wobei die Lackzusammensetzung vorzugsweise mittels Gießen aufbringbar ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung einer beispielhaften Ausführungsform eines Verfahrens zur Herstellung plattenförmiger Werkstücke, wobei verschiedene Zustände veranschaulicht werden, die jeweils entsprechenden Fertigungsstufen zugeordnet sind;
- Fig. 2: eine schematisch vereinfachte Blockdarstellung zur Veranschaulichung einer beispielhaften Ausführungsform einer Anlage zu Herstellung plattenförmiger Werkstücke; und
- Fig. 3: ein stark vereinfachtes schematisches Flussdiagramm zur Veranschaulichung einer beispielhaften Ausführungsform eines Verfahrens zur Herstellung plattenförmiger Werkstücke.

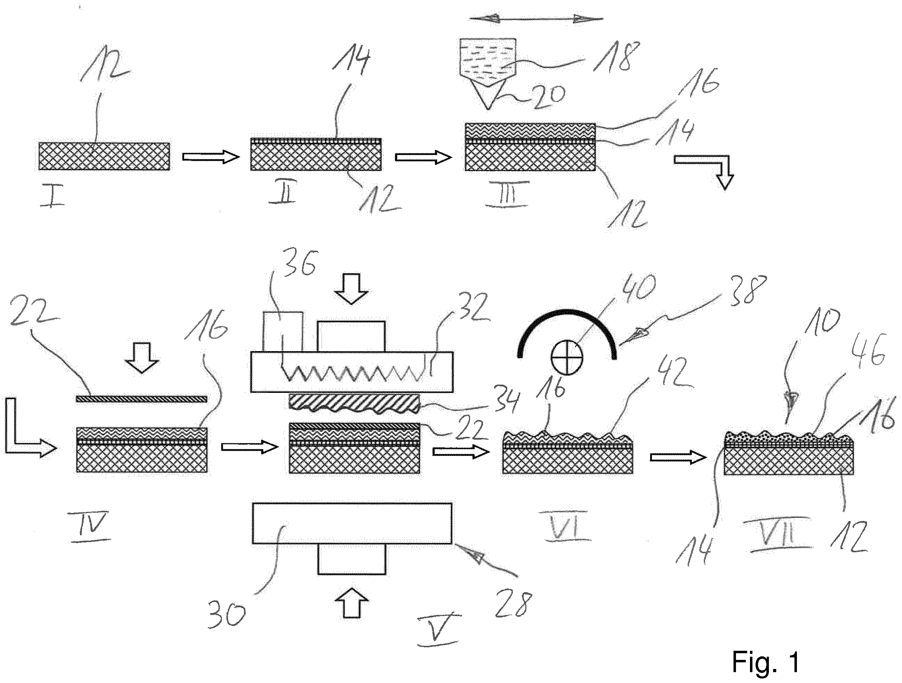

Fig. 1 veranschaulicht anhand einer stark vereinfachten Darstellung ein Prozessschema einer beispielhaften Ausführungsform eines Verfahrens zur Herstellung eines plattenförmigen Werkstücks. Mit dem Verfahren können beispielsweise Möbelplatten, Bodenlaminate, Paneele, etwa Wandpaneele oder Deckenpaneele, und ähnliche grundsätzlich flach gestaltete Bauteile hergestellt werden, die mit einem Dekor sowie mit einer strukturierten Deckschicht versehen sind.

Verschiedene Schritte oder Stationen des Fertigungsablaufs sind mit I bis VII gekennzeichnet.

Als Trägerschicht oder Substrat 12 wird eine Trägerplatte bereitgestellt, die unter den gegebenen Verarbeitungsbedingungen, insbesondere den Pressbedingungen, hinreichend thermisch und mechanisch stabil ist. Dabei kann es sich etwa um eine Trägerplatte aus Holz, Holzfasern, Mineralfasern, mineralischen Werkstoffen, und dergleichen handeln. Insbesondere eignen sich beispielhaft sogenannte hochdichte Faserplatten (HDF) für die Trägerschicht. Vorstellbar ist jedoch auch die Verwendung von Gipsfaserplatten, Kunststoffplatten, faserverstärkten Kunststoffplatten, Mineralfaserplatten, Zementgebundenen Platten, rein mineralischen Platten und dergleichen.

Holzfaserplatten können neben HDF-Platten auch sogenannte mitteldichte Holzfaserplatten (MDF), Holz-Kunststoff-Verbundplatten (WPC Wood-Plastic-Composites), Mineral-Kunststoffplatten und dergleichen umfassen, die gleichermaßen geeignet sind. Gleichwohl ist die Verwendung von HDF-Trägerplatten bevorzugt.

Der mit I angedeutete Schritt kann grundsätzlich auch eine Vorbearbeitung der Platten beinhalten. Dies kann etwa einen Zuschnitt, eine Kalibrierung, Schleifvorgänge, Reinigungs- und Entstaub-Vorgänge, eine Beflammung, eine Plasma- oder KoronaBehandlung (insbesondere bei Kunststoffen) umfassen.

In einem nachgelagerten mit II bezeichneten Prozess wird eine Dekorschicht 14 auf die Trägerschicht 12 aufgebracht. Vorzugsweise handelt es sich bei der Dekorschicht 14 um Dekorpapier, das mit dem gewünschten Dekor versehen ist, etwa mit einer Bedruckung oder dergleichen. Die Dekorschicht 14 kann etwa durch Kleben auf der Trägerschicht 12 befestigt werden.

Es versteht sich, dass der Abschnitt II auch einen entsprechenden Zuschnitt oder eine sonstige Bearbeitung der Dekorschicht 14 umfassen kann.

Neben Dekorpapier eignen sich grundsätzlich auch Furniere, bedruckte Folien und ähnliche bogenförmige Werkstoffe als Dekorschicht oder Dekorbogen.

Es ist grundsätzlich auch vorstellbar, die Trägerschicht 12, die im Teilprozess I zur Verfügung gestellt wird, zu lackieren, zu bedrucken (etwa indirekter Tiefdruck, Digitaldruck) oder in sonstiger Weise mit einem Dekor zu versehen.

In einem nachgelagerten Teilprozess III wird ein Beschichtungsstoff, insbesondere ein Beschichtungsstoff auf Lackbasis, auf die Dekorschicht 14 aufgebracht, um eine Deckschicht 16 auszubilden. Der Beschichtungsstoff wird vorzugsweise auf Lackbasis bereitgestellt und mit einem Applikator 20 aufgebracht, insbesondere durch Gießen. Beim Prozessschritt III ist ein Vorrat des Lack-basierten Beschichtungsstoffes mit 18 bezeichnet. Der Beschichtungsstoff 18 bildet die Deckschicht 16 aus und versiegelt somit die Dekorschicht 14. Die Dekorschicht 14 ist zwischen der Trägerschicht 12 und der Deckschicht 16 angeordnet.

Neben Gießverfahren ist es auch vorstellbar, den Beschichtungswerkstoff 18 durch ein geeignetes Walzverfahren, mit einer Rakel oder in ähnlicher Weise aufzubringen.

In einem nachgelagerten Teilprozess IV wird eine mit 22 bezeichnete Trennschicht erzeugt bzw. appliziert. Dies kann insbesondere ein Aufbringen eines Trennpapiers umfassen, das in einem nachgelagerten Teilprozess einen direkten Kontakt der Deckschicht 16 mit weiteren Bearbeitungseinrichtungen vermeidet. Sofern das Trennpapier gewählt ist, um die Trennschicht 22 auszubilden, kann über dessen Oberflächengestaltung (Glätte, Rauheit, Faserigkeit) eine sich ergebende Mikrostrukturierung der Deckschicht 16 beeinflusst bzw. gesteuert werden. Dies betrifft insbesondere die Erzeugung eines gewünschten Glanzgrades.

Alternativ oder zusätzlich zu einer Trennschicht 22 kann in zumindest einigen beispielhaften Ausgestaltungen ein Trennmittel vorgesehen sein, das beispielhaft dem Beschichtungsstoff 18 beigefügt oder auf diesen aufgetragen wird. Alternativ oder zusätzlich ist es vorstellbar, ein geeignetes Trennmittel auf das oder diejenigen Bauteile aufzutragen, die in nachgelagerten Prozessschritten (insbesondere beim Pressen) mit der Deckschicht unmittelbar in Berührung kommen.

Es ist vorstellbar, sowohl ein Trennmittel vorzusehen, als auch eine separate Trennschicht 22, die insbesondere als Trennpapier ausgebildet ist. Auf diese Weise kann mit dem Trennpapier zumindest der Glanzgrad gesteuert werden.

Ein nachgelagerter Teilprozess V umfasst einen Pressvorgang, der mit einer Pressvorrichtung 28 durchgeführt wird. Die Pressvorrichtung 28 kann grundsätzlich etwa der Pressvorrichtung gemäß der DE 101 28 290 B4 zumindest ähnlich gestaltet sein, wobei dort primär eine Taktpresse für Kunstharz- oder Silikonharz-basierte Deckschichten vorgestellt wird.

Die Pressvorrichtung 28 umfasst Pressplatten 30, 32, von denen eine einer Seite und die andere der anderen Seite des Werkstücks zugeordnet ist. Die Pressvorrichtung 28 kann etwa als Taktpresse ausgestaltet sein, insbesondere als sogenannte Kurztaktpresse. Zumindest einer der Pressplatten 30, 32 ist beispielhaft ein Zylinder, ein Kniehebel, eine Spindel oder ein ähnliches Antriebselement zum Aufbringen einer Kraft zugeordnet.

Die Pressvorrichtung 28 umfasst ferner zumindest ein Strukturblech 34, das beispielhaft der Pressplatte 32 zugeordnet ist. Das Strukturblech 34 ist dazu ausgebildert, in der Deckschicht 16 eine Strukturierung zu erzeugen. Das Strukturblech 34 kann grundsätzlich als Bestandteil der Pressplatte 30 ausgestaltet sein. Bevorzugt ist es jedoch, das Strukturblech 34 als Anbauteil und insbesondere auswechselbar zu gestalten, damit verschiedenartige Strukturierungen mit einer einzigen Pressvorrichtung 28 erzeugt werden können.

Es ist grundsätzlich auch vorstellbar, die Trennschicht 22 nicht direkt auf die Deckschicht 16 sondern zunächst auf das Strukturblech 34 aufzubringen.

Das Strukturblech 34 kann beispielhaft derart gestaltet sein, dass sich eine Imitation oder Nachbildung einer Holzmaserung, einer Steinstruktur oder Ähnliches ergibt.

Der Pressdruck, die Pressdauer und die Presstemperatur der Pressvorrichtung 28 werden derart gewählt, dass einerseits der Verbund umfassend die Trägerschicht 12, die Dekorschicht 14 und die Deckschicht 16 gefügt wird. Ferner wird über das Strukturblech 34 in die Deckschicht 16 eine Strukturierung eingebracht.

Das Strukturblech 34 ist mit einer Strukturierung versehen, die gewissermaßen ein Negativ der gewünschten Strukturierung der Deckschicht 16 darstellt. Eine makroskopisch spürbare und ggf. sichtbare Strukturierung ist auf diese Weise erzeugbar. Es ist jedoch auch vorstellbar, über eine Oberflächenbeschaffenheit, insbesondere eine Oberflächenrauheit, des Strukturblechs 34 den Glanzgrad der Deckschicht 16 weiter zu beeinflussen. Demgemäß kann der Glanzgrad der Deckschicht 16 über die Trennschicht 22 und/oder eine Mikrostrukturierung des Strukturblechs 34 beeinflusst werden.

Es ist grundsätzlich vorstellbar, die Trägerschicht 12, etwa die HDF-basierte Trägerplatte, auch an ihrer Seite, die der Dekorschicht 14 abgewandt ist, mit einer weiteren Schicht zu versehen. Hierbei kann es sich etwa um eine Stützschicht handeln, die beispielsweise die Formbeständigkeit und Gestaltfestigkeit des Werkstücks erhöht. Beispielhaft ist es vorstellbar, ein sogenanntes Gegenzugpapier auf diejenige Seite der Trägerschicht 12 aufzubringen, die von der Dekorschicht 14 abgewandt ist. Bei dem Gegenzugpapier kann es sich etwa um einen Bogen handeln, der mit Melaminharz oder mit Harnstoffharz (UF-Harz) getränkt ist.

Gemäß beispielhaften Ausführungsformen ist die Pressvorrichtung 28 mit einer Heizeinrichtung 36 versehen, die zum Beispiel als Widerstandsheizung ausgestaltet ist. Andere Prinzipien für die Heizeinrichtung 36 sind ohne weiteres vorstellbar.

Durch die Heizeinrichtung 36 wird beispielsweise die Pressplatte 32, insbesondere das Strukturblech 34, das an der Pressplatte 32 aufgenommen ist, derart erwärmt, dass bereits teilweise eine Vernetzung in der Deckschicht 16 stattfinden kann. Dies hat den Vorteil, dass die durch das Strukturblech 34 erzeugte Struktur nach dem Öffnen der Pressvorrichtung 28 nicht oder nur unwesentlich verläuft.

Gleichwohl ist es bevorzugt, wenn zusätzlich in einem weiteren Teilprozess VI eine weitere Vernetzung/Aushärtung der Deckschicht 16 erfolgt, wobei zu diesem Zweck eine Bestrahlung mit elektromagnetischer Strahlung erfolgt. Hierfür ist eine mit 38 bezeichnete Strahlungsquelle vorgesehen, die insbesondere zumindest eine UV-Lichtquelle 40 enthält. Die UV-Lichtquelle 40 kann Licht im UV-Spektrum emittieren. Die Beschichtung 16 ist derart zusammengesetzt, dass in Reaktion auf die elektromagnetische Bestrahlung, insbesondere die Bestrahlung mit UV-Licht, eine weitere Vernetzung bzw. ein vollständiges oder nahezu vollständiges Aushärten zumindest der Oberfläche der Deckschicht 16 erfolgt.

An der Oberfläche der Deckschicht 16 ist eine Strukturierung 42 ausgebildet, die im Wesentlichen auf die Gestaltung des Strukturblechs 34 zurückgeht.

Zur Erzeugung der elektromagnetischen Strahlung eignen sich etwa sogenannte Mitteldruckstrahler, insbesondere sogenannte Quecksilber-dotierte (Hg-dotiert) Mitteldruckstrahler. Alternativ sind sogenannte Eisen-dotierte (Fe-dotiert) und/oder Galliumdotierte (Ga-dotiert) Strahler vorstellbar, je nach gewünschter Wellenlängencharakteristik.

Vorzugsweise wird vor der Applikation der elektromagnetischen Strahlung durch die Strahlungsquelle 38 die Trennschicht 22 entfernt. Dies erfolgt nach dem Öffnen der Pressvorrichtung 28.

Es versteht sich, dass auch Kombinationen verschieden dotierter Mitteldruckstrahler vorstellbar sind. Ferner sind sogenannte UV-LED-Strahler vorstellbar, wobei wiederum eine Kombination mit Mitteldruckstrahlern vorstellbar ist, etwa mit Quecksilber-dotierten Strahlern. Ferner ist die Verwendung von UV-C-Strahlern vorstellbar, die in geeigneter Weise mit anderen Strahlern kombinierbar sind.

Alternativ ist eine Bestrahlung mit Elektronenstrahlern vorstellbar, die etwa durch sogenannte Elektronenbeschleuniger erzeugbar ist. Auch auf diese Weise kann das Aushärten der Deckschicht angeregt und vollendet werden.

Nach der Bestrahlung mit der Strahlungsquelle 38 weist die Deckschicht 16 eine ausgehärtete Struktur auf, insbesondere eine ausgehärtete Oberfläche 46. Auf diese Weise ist eine Weiterverarbeitung des erzeugten Werkstücks 10 ermöglicht.

Nach dem Aushärten der Deckschicht 16 ist es möglich, mehrere Werkstücke 10 übereinander zu stapeln. Jedoch ist es auch vorstellbar, die Werkstücke 10 zuzuschneiden, abzulängen, oder in sonstiger Weise zu bearbeiten. Beispielhaft ist auch eine Bearbeitung mittels Fräsen, insbesondere Profilfräsen, vorstellbar, um Verbindungsprofile (Nut- und Federprofil, Klickprofil und dergleichen) zu erzeugen.

Grundsätzlich wäre es vorstellbar, auf das Aushärten durch Bestrahlung mit energiereicher Strahlung zu verzichten, wenn in der Pressvorrichtung 28 hinreichend lange Taktzeiten bzw. hinreichend hohe Temperaturen gewählt werden, um bereits dort ein vollständiges oder nahezu vollständiges Aushärten zumindest der Oberfläche der Deckschicht 16 zu bewirken. Das kombinierte, zweistufige Aushärten weist jedoch verschiedene Vorteile auf und kann insbesondere als guter Kompromiss im Hinblick auf Zykluszeiten und Energiebedarf aufgefasst werden.

Das Verfahren zur Herstellung plattenförmiger Bauteile gemäß zumindest einigen Ausführungsformen der vorliegenden Offenbarung weisen verschiedene Vorteile auf, die sich insbesondere im Vergleich zu Verfahren ergeben, die Melaminharz-basierte Beschichtungen oder Melamin-getränkte Papiere nutzen. Die Bildung flüchtiger Kondensate bzw. Emissionen von Formaldehyd können deutlich reduziert oder gar vermieden werden.

Es lassen sich deutlich spürbare Strukturen erzeugen, die haptisch deutlich wahrnehmbar sind. Ein weiterer Vorteil besteht darin, dass eine gewünschte Glanzeinstellung bzw. ein gewünschter Glanzgrad durch einfache Maßnahmen erzielbar ist.

Die Verwendung eines Lack-basierten Beschichtungsstoffes für die Deckschicht erlaubt generell die Nutzung verschiedenartiger Rohstoffe und Ausgangsstoffe, wodurch insgesamt die Produktvielfalt und die Gestaltungsfreiheit wesentlich erhöht wird.

Zeitintensive und kostenintensive Zwischenschritte, die etwa sogenannte getränkte Papiere oder Laminatpapiere betreffen, und die bei etablierten Verfahren unumgänglich sind, können vermieden werden. Gemäß zumindest einigen Ausführungsformen kann mit lediglich drei Schichten, nämlich der Trägerschicht, der Dekorschicht und der Deckschicht, ein hochwertiges Bauteil mit Strukturierung sowie einem Dekor erzeugt werden.

Ein weiterer Vorteil geht dahin, dass sich günstige Eigenschaften lackierter Oberflächen, vor allem im Hinblick auf die haptische Wahrnehmung sowie den spürbaren Gehschall oder Trittschall, mit einer Strukturierung der Oberflächen verknüpfen lassen, die grundsätzlich mit Melamin-basierten oder Kunstharz-basierten Deckschichten vorstellbar ist. Mit anderen Worten können die Vorteile Lack-basierter Schichten und Melamin-basierter Schichten kombiniert werden.

Im Hinblick auf den Aufwand für die Fertigungsanlage ist es von Vorteil, dass vorhandene Kurztaktpressen und sonstige Fertigungsvorrichtungen, insbesondere gravierte und/oder mit einem Relief versehene Strukturplatten, die bislang für die Bearbeitung/Verarbeitung Melamin-basierter Schichten genutzt wurden, nunmehr auch für Lack-basierte Deckschichten nutzbar sind. Wesentliche Prozessparameter, betreffend das Verpressen, liegen in den Bereichen, die im Wesentlichen auch für die Bearbeitung Melamin-basierter Deckschichten gelten, insbesondere betreffend den Druck und die Temperatur beim Pressen.

Es ist möglich, über eine zusätzliche Mikrostrukturierung bei den Strukturblechen den Glanzgrad der zu erzeugenden Oberfläche der Deckschicht zu beeinflussen und zu steuern. Dies hat den Vorteil, dass die Zugabe von Mattierungsmitteln zur Erhöhung der Mattheit vermieden oder zumindest reduziert werden kann.

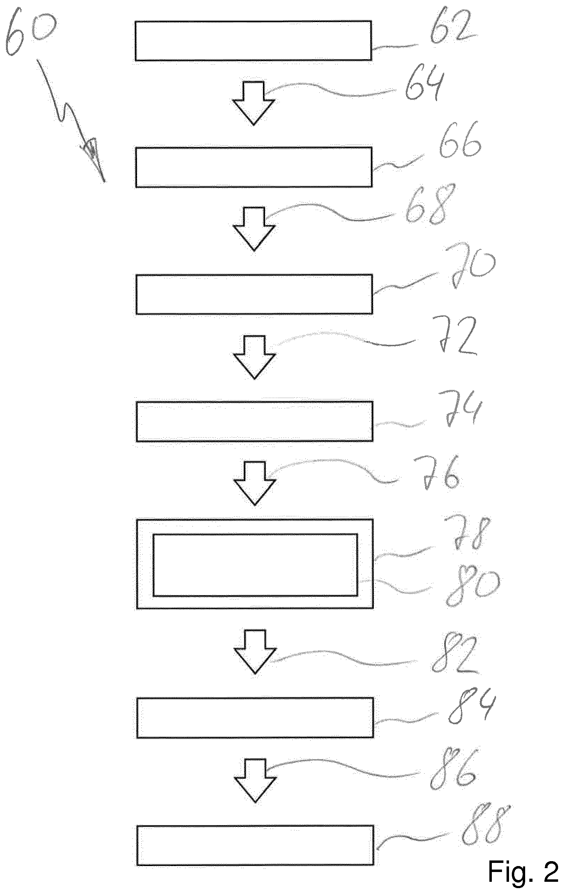

Fig. 2 zeigt eine schematische, stark vereinfachte Blockdarstellung zur Veranschaulichung einer beispielhaften Ausführungsform einer Anlage 60 zu Herstellung plattenförmiger Werkstücke.

Die Anlage 60 umfasst eine Bereitstellungseinheit 62 für Trägerplatten, die eine Trägerschicht ausbilden. Die Bereitstellungseinheit 62 kann grundsätzlich zur Bearbeitung und/oder Vorbehandlung der Trägerplatten ausgebildet sein, etwa zum Zuschneiden. Eine Handhabungseinrichtung, die insbesondere eine Transfereinheit 64 aufweist, ist dazu ausgebildet, die Trägerplatten zu verschiedenen Stationen der Anlage 60 zu transferieren, etwa entlang einer Fertigungsstraße.

Ferner umfasst die Anlage 60 eine Applikationseinheit 66 für eine Dekorschicht, insbesondere für einen Dekorbogen oder für Dekorpapier, welches auf die Trägerplatte aufgebracht wird und etwa mittels Kleben befestigt werden kann. Es schließt sich eine Transfereinheit 68 für das Bauteil an, die als Teil der Handhabungseinrichtung ausgebildet ist.

Die Anlage 60 umfasst ferner eine Aufbringeinheit 70 zum Aufbringen eines Beschichtungsstoffes auf Lackbasis zur Erzeugung einer Deckschicht, insbesondere mittels Gießen. Es schließt sich eine Transfereinheit 72 für das Bauteil an, die als Teil der Handhabungseinrichtung ausgebildet ist.

Gemäß zumindest einigen beispielhaften Ausführungsformen umfasst die Anlage 60 ferner eine Aufbringeinheit 74 zum Aufbringen einer Trennschicht, insbesondere eines Trennpapiers, auf die Deckschicht. Es schließt sich eine Transfereinheit 76 für das Bauteil an, die als Teil der Handhabungseinrichtung ausgebildet ist.

Die Anlage 60 umfasst ferner eine Pressvorrichtung 78, die mit einer Heizeinrichtung 80 versehen ist, um das Werkstück zu fügen, insbesondere um die Trägerschicht, die Dekorschicht und die Deckschicht unter Druck und Temperatur miteinander zu verbinden. Die Pressvorrichtung 78 ist vorzugsweise als Taktpresse, insbesondere als Kurztaktpresse, ausgestaltet, wobei zumindest ein Pressblech oder ein Strukturblech vorgesehen ist, um beim Pressen eine Strukturierung der Deckschicht zu erzeugen. Die Trennschicht, sofern vorhanden, verhindert einen direkten Kontakt zwischen der Deckschicht und der Strukturplatte.

Der Wärmeeintrag über die Heizeinrichtung 80 bewirkt vorzugsweise ein zumindest teilweises Aushärten, also eine Erhöhung des Vernetzungsgrades in der Deckschicht. Dies hat den Vorteil, dass die erzeugte Struktur auch dann noch weitgehend beibehalten wird, wenn das Werkstück von der Pressvorrichtung 78 für weitere Bearbeitungsschritte freigegeben wird. Es schließt sich demgemäß eine weitere Transfereinheit 82 für das Bauteil an, die als Teil der Handhabungseinrichtung ausgebildet ist.

Gemäß zumindest einigen beispielhaften Ausführungsformen umfasst die Anlage 50 ferner eine Abziehstation 84 für das Trennpapier, sofern dieses durch die Aufbringeinheit 74 aufgebracht wurde. Es schließt sich eine Transfereinheit 86 für das Bauteil an, die als Teil der Handhabungseinrichtung ausgebildet ist.

Die Anlage 60 umfasst ferner eine Bestrahlungseinrichtung 88, die elektromagnetische Strahlung, insbesondere UV-Strahlung, emittiert, mit der die Deckschicht weiter ausgehärtet werden kann, wenn die Deckschicht entsprechend bestrahlt wird. Nach dem Aushärten können die Werkstücke weiter bearbeitet etwa durch Zuschneiden, Ablängen, Fräsen im Kantenbereich und dgl.

Zumindest bei Anlagen 60 mit hohem Automatisierungsgrad können die Werkstücke automatisiert und weitgehend selbstständig durch die Handhabungseinrichtung entlang der Fertigungsrichtung von Station zu Station vorgerückt werden, um die gewünschte Bearbeitung vorzunehmen.

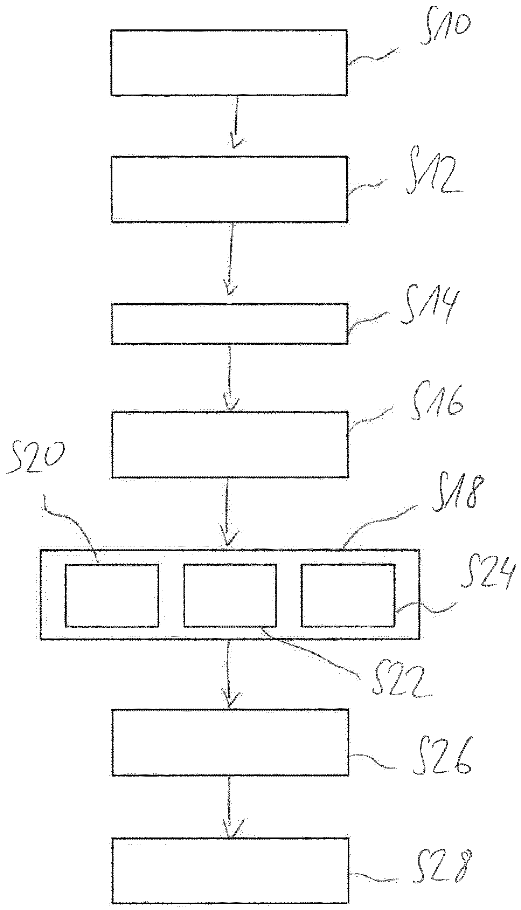

Fig. 3 zeigt ein stark vereinfachtes schematisches Flussdiagramm zur Veranschaulichung einer beispielhaften Ausführungsform eines Verfahrens zur Herstellung plattenförmiger Werkstücke.

Das Verfahren umfasst einen Schritt S10, der das Bereitstellen einer Trägerschicht umfasst, insbesondere einer Trägerplatte aus einem HDF-Werkstoff.

Es folgt ein Schritt S12, der das Erzeugen einer Dekorschicht auf der Trägerschicht umfasst, insbesondere durch Aufbringen eines Dekorpapiers.

Es schließt sich ein Schritt S14 an, der das Aufbringen eines Beschichtungsstoffes auf Lackbasis auf die Dekorschicht umfasst, auf dessen Basis eine Deckschicht erzeugt wird, die die Dekorschicht abdeckt.

Es folgt ein optionaler Schritt S16, der das Aufbringen eines Trennpapiers auf die Deckschicht umfasst. Auf diese Weise wird das Werkstück für einen nachfolgenden Pressvorgang vorbereitet.

Der Pressvorgang findet in einem nachfolgenden Schritt S18 statt, insbesondere in einer Taktpresse oder Kurztaktpresse. Der Schritt S18 umfasst mehrere Teilschritte S20, S22, S24, die parallel ablaufen können. Ein Teilschritt S20 betrifft die Verbindung zwischen der Trägerschicht, der Dekorschicht und der Deckschicht, die durch den Pressvorgang erzeugt wird. Ein Teilschritt S22 betrifft die Erzeugung einer Strukturierung in der Deckschicht, die insbesondere durch eine Negativstruktur/ein Negativrelief bei der Pressplatte erzeugt wird ist, die der Deckschicht zugeordnet ist. Ein Teilschritt S24 betrifft ein zumindest teilweises Aushärten der Deckschicht durch Wärmeeintrag in der Presse.

Nach dem Pressvorgang folgt ein optionaler Schritt S26, der das Lösen des Trennpapiers von der Deckschicht umfasst, sofern dieses im Schritt S16 aufgebracht wurde.

Es schließt sich ein Schritt S28 an, der ein Aushärten der strukturierten Deckschicht durch elektromagnetische Strahlung, insbesondere durch UV-Strahlung, umfasst. Vorzugsweise wird beim Schritt S28 in der Deckschicht, insbesondere der Oberfläche der Deckschicht, ein Vernetzungsgrad erreicht, der eine Nachbearbeitung oder bestimmungsgemäße Verwendung des Werkstücks erlaubt, etwa als Bodenlaminat, Wandpaneel, Deckenpaneel, Möbelbauteil oder dgl.

**Beispielhafte Prozessparameter sind der folgenden Tabelle entnehmbar:**

| Prozessparameter | Wertebereich | Verfeinerung/Bemerkung |
|---|---|---|
| Auftragsmenge: | 50-500 g/m² | abhängig von der Strukturtiefe und gewünschten mechanischen Eigenschaften |
| Lackviskosität: | 1-10 Pas bei 20°C | 2-5 Pas bei 20°C |
| Pressdruck: | 1,5-20 N/mm² | 2-5 N/mm² |
| Presstemperatur: | 80-200°C | 150-180°C |
| Presszeit: | 5-120 s | 10-20 s |
| Strahlenhärtung: | ohne, UV-Härtung, ES-Härtung | UV-Härtung |
| Strahlungsquelle Typ: | Hg-Mitteldruckstrahler, Ga-/Fe-dotierte Mitteldruckstrahler, LED-Strahler | Hg-Mitteldruckstrahler |
| Leistungsdichte: | 80-240 W/cm | 120 W/cm |
| Strahlungsdosis: | 100-800 mJ/cm² | 200-500 mJ/cm² |

Zur weiteren Veranschaulichung verschiedener Aspekte des offenbarungsgemäßen Verfahrens sowie der offenbarungsgemäßen Lackzusammensetzung folgt ein Ausführungsbeispiel:
Auf eine hochverdichtete Holzfaserplatte (HDF) als Trägerschicht wird als Dekorschicht ein bedrucktes Dekorpapier aufgeleimt (zum Beispiel das Produkt Tecofoil, beziehbar über die Firma Bausch-Linnemann). Mit einer Gießmaschine wird bei einer Anlagengeschwindigkeit von ca. 50 m/min eine Menge von ca. 150 g/m² einer UV-Lackformulierung als Deckschicht aufgetragen

Die Deckschicht ist wie folgt zusammengesetzt (Angaben jeweils in Gewichtsanteilen):
- 23,6 Teile: ungesättigter Polyester,
- 47 Teile: aliphatisches Urethanmetacrylatharz gelöst in Monomer-Mischung von Methacrylat-Monomeren,
- 12,5 Teile: Hexandioldimethacrylat (HDDMA),
- 0,5 Teile: Photoinitiatormischung
- 0,4 Teile: Dispergieradditiv
- 0,5 Teile: Entschäumerlösung
- 0,1 Teile: Entlüfterlösung
- 11 Teile: Füllstoff auf Silikatbasis
- 3 Teile: Korund Körnung 800
- 0,6 Teile: Substratbenetzungsadditiv
- 0,8 Teile: Antiabsetzmittel

Diese Mischung weist eine Viskosität von ca. 1,4 Pas bei 20°C auf. Direkt vor der Verarbeitung auf der Gießmaschine werden auf 100 T dieser Rezeptur 2,5 T Peroxidhärter zugegeben.

Nach Auftrag der Deckschicht wird ein silikonbeschichtetes Trennpapier (z.B. Type P168, ca. 70 g/m², Fa. Surteco) auf die flüssige Deckschicht gelegt

Die HDF-Platte mit Dekorschicht, Deckschicht und Trennpapier wird in eine Presse gegeben, auf deren oberem Pressstempel eine Strukturblech mit einer Holzstruktur befestigt ist. Die Platte wird bei einer Pressentemperatur von 170°C und einem Druck von 2,5 N/mm² für 15 s gepresst.

Nach Öffnen der Presse wird die Platte mit der teilgehärteten Deckschicht entnommen, das Trennpapier entfernt und ohne Abkühlung mit einem Gallium-dotierten Mitteldruckstrahler bei einem Vorschub von 10 m/min und einer Leistung von 120 W/cm vollständig ausgehärtet.

Ergebnis ist eine blasen- und störungsfreie, qualitativ hochwertige Oberfläche, die bzgl. Optik, Glanz, Kratzfestigkeit, Abrieb, chemischer Beständigkeit den üblichen Anforderungen an ein Laminat zur Verwendung als Fußbodendiele entspricht.

Beispielhaft nutzbare thermische Initiatoren können der folgenden Liste entnommen werden:
1. Azoverbindungen (z.B. Azoisobutyronitril AIBN)
2. Organische Peroxide (Cyclohexanonperoxid, Methylethylketonperoxid, 1,1-Di-(tert-Butylperoxy)-3,3,5-trimethylcyclhexan, Benzoylperoxide) anorganische Peroxide (z.B. Peroxodisulfate)

Als Beschleuniger / Katalysatoren für thermische Initiatoren sind bekannte Schwermetallkatalysatoren (z.B. Zink, Cobalt, Mangan) denkbar, zur Beschleunigung des Zerfalls von Peroxiden (z.B. Cobaltsalze von Fettsäuren).

Beispielhaft nutzbare Photoinitiatorengruppen können der folgenden Liste entnommen werden:
1. Benzoin, Benzoinderivate, Benzoinether wie z.B. Benzyldimethalketal
2. Benzophenon und Derivate
3. Alpha-Hydroxyketone (z.B. 1-Hydroxy-cyclohexyl-phenyl-keton, 2-Hydroxy-2-methyl-1-phenyl-1-propanon)
4. Phenylglyoxylate (z.B. Methylbenzoylformat)
5. Alpha-Aminoketone
6. Phosphororganische Verbindungen (Monoacylphosphinoxide MAPO, z.B. Diphenyl-(2,4,6-trimethylbenzoyl)-phosphinoxid, Bisacylphosphinoxide BAPO, z.B. Phenyl-bis-(2,4,6-trimethylbenzoyl)-phosphinoxid)
7. Thioxanthon und Derivate

Als Beschleuniger für Photoinitiatoren sind Aminverbindungen denkbar, vorzugsweise tertiäre Amine, die in Kombination mit der obigen Photoinitiatoren-Gruppe 2 (Benzophenon) wirksam sind.

## Patentansprüche

1. Verfahren zur Herstellung eines plattenförmigen Werkstücks (10), umfassend die folgenden Schritte:
- Bereitstellen einer Trägerschicht (12),
- Erzeugen einer Dekorschicht (14) auf der Trägerschicht (12),
- Aufbringen eines Beschichtungsstoffes (18) auf Lackbasis auf die Dekorschicht (14) zur Erzeugung einer Deckschicht (16),
- Pressen des Werkstücks (10) in einer Pressvorrichtung (28), umfassend Erzeugung einer Oberflächenstrukturierung (42) in der Deckschicht (16), und
- Aushärten der strukturierten Deckschicht (16) durch elektromagnetische Strahlung, insbesondere UV-Strahlung.

2. Verfahren nach Anspruch 1, wobei eine der Deckschicht (16) zugewandte Pressplatte (32) mit einer Strukturierung (34) versehen ist, die beim Pressen in der Deckschicht (16) abgebildet wird.

3. Verfahren nach Anspruch 2, wobei die der Deckschicht (16) zugewandte Pressplatte (32) mit einer Mikrostrukturierung versehen ist, die einen Glanzgrad der Deckschicht (16) definiert.

4. Verfahren nach einem der vorhergehenden Ansprüche, wobei das Erzeugen der Dekorschicht (14) das Aufbringen eines Dekorbogens umfasst, vorzugsweise das Aufbringen eines Dekorpapiers.

5. Verfahren nach einem der vorhergehenden Ansprüche, wobei dem Schritt des Pressens ein Schritt vorgelagert ist, der ein Aufbringen eines Trennpapiers (22) auf die Deckschicht (16) umfasst, wobei das Trennpapier (22) nach dem Pressen entfernt wird, vorzugsweise vor dem Aushärten mittels elektromagnetischer Strahlung.

6. Verfahren nach Anspruch 5, wobei eine Oberflächenstruktur des Trennpapiers (22) einen Glanzgrad der Deckschicht (16) definiert.

7. Verfahren nach einem der vorhergehenden Ansprüche, wobei dem lackartigen Beschichtungsstoff (18) ein Trennmittel beigemischt wird, und/oder wobei eine der Deckschicht (16) zugewandte Pressplatte (32) mit einem Trennmittel versehen wird.

8. Verfahren nach einem der vorhergehenden Ansprüche, wobei der Beschichtungsstoff (18) durch ein Gießverfahren aufgebracht wird.

9. Verfahren nach einem der vorhergehenden Ansprüche, wobei das Pressen in einer beheizbaren Pressvorrichtung (28) erfolgt und ein Erwärmen zumindest der Deckschicht (16) umfasst.

10. Verfahren nach Anspruch 9, wobei ein Aushärten der Deckschicht (16) zweitstufig erfolgt, umfassend:
- Härten durch Wärmeeintrag in der Pressvorrichtung (28), und
- Härten durch elektromagnetische Bestrahlung (40), insbesondere mittels UV-Strahlung.

11. Anlage (60) zur Herstellung eines plattenförmigen Werkstücks (10), vorzugsweise gemäß dem Verfahren gemäß einem der Ansprüche 1 bis 10, wobei die Anlage (60) Folgendes aufweist:
- eine Bereitstellungseinheit (62) für eine Trägerschicht (12), insbesondere für Trägerplatten,
- eine Applikationseinheit (66) für eine Dekorschicht (14), insbesondere für einen Dekorbogen,
- eine Ausbringeinheit (70) zum Aufbringen eines Beschichtungsstoffes (18) auf Lackbasis auf die Dekorschicht zur Erzeugung einer Deckschicht (16),
- eine Pressvorrichtung (8, 78), insbesondere umfassend eine Kurztaktpresse, die eine Pressplatte (32) umfasst, die mit einer Negativstruktur (34) versehen ist, um während eines Pressvorgangs, bei dem die Trägerschicht (12), die Dekorschicht (14) und die Deckschicht (16) miteinander gefügt werden, eine Oberflächenstrukturierung der Deckschicht (16) zu erzeugen, wobei die Pressplatte (32) vorzugsweise beheizbar ist, um die Deckschicht (16) auszuhärten,
- eine Bestrahlungseinheit (38, 88) zur Erzeugung elektromagnetischer Strahlung zum Aushärten der Deckschicht (16), und
- eine Handhabungseinheit (64, 68, 72, 76, 82, 86) zur Handhabung des Werkstücks (10).

12. Plattenartig gestaltetes Werkstück (10), insbesondere hergestellt gemäß einem Verfahren nach einem der Ansprüche 1 bis 10 hergestelltes Werkstück, das Folgendes ausweist:
- eine Trägerschicht (12),
- eine Dekorschicht (14), die auf die Trägerschicht (12) aufgebracht ist,
- eine Deckschicht (16) auf Lackbasis, die die Dekorschicht (14) bedeckt,
wobei die Deckschicht (16) eine Oberflächenstrukturierung (42) aufweist, die durch eine Negativstruktur einer Pressplatte (34) erzeugt ist, und
wobei die Deckschicht (16) zumindest teilweise durch elektromagnetische Strahlung, insbesondere durch UV-Strahlung, ausgehärtet ist.

13. Lösemittelfreie Lackzusammensetzung, welche mittels einer Pressvorrichtung und/oder mittels Strahlung aushärtbar ist, wobei die Lackzusammensetzung Folgendes aufweist:
(a) radikalisch polymerisierbare Bindemittel mit Monomeren und mit Oligomeren,
(b) thermische Initiatoren und/oder Photoinitiatoren, und
(c) Katalysatoren.

14. Lackzusammensetzung nach Anspruch 13, aufweisend:
(a) radikalisch polymerisierbare Bindemittel mit Monomeren von 5 bis 50 Gew.-%, vorzugsweise mit Monomeren von 10 bis 20 Gew.-% und mit Oligomeren von 10 bis 80 Gew.-%, vorzugsweise von 50 bis 70 Gew.-%,
(b) thermische Initiatoren von 0,5 bis 5 Gew.-%, vorzugsweise von 2,5 bis 4 Gew.-%, und/oder Photoinitiatoren von 1 bis 6 Gew.-%, vorzugsweise von 2 bis 4 Gew.-%,
(c) Katalysatoren von 0 bis 3 Gew.-%, und
(d) mindestens einen Zusatzstoff ausgewählt aus der Gruppe, die aus Folgendem besteht: Inhibitoren, Pigmente, Füllstoffe, Additive und Trennmittel,
wobei sich die jeweiligen Gewichtsprozente auf die Gesamtmasse der Zusammensetzung beziehen.

15. Verwendung einer Lackzusammensetzung nach einem der Ansprüche 13 oder 14, in einem Verfahren nach einem der Ansprüche 1 bis 10 und/oder zur Herstellung eines Werkstücks nach Anspruch 12, wobei die Lackzusammensetzung vorzugsweise mittels Gießen aufbringbar ist.
